(19) Europäisches Patentamt

European Patent Office

Office européen des brevets

(11) EP 2 645 592 A1

(12) **EUROPEAN PATENT APPLICATION**

(43) Date of publication:
02.10.2013 Bulletin 2013/40

(51) Int Cl.:
*H04B 7/04* (2006.01)   *H04B 7/06* (2006.01)

(21) Application number: 12305360.5

(22) Date of filing: 29.03.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Alcatel Lucent
75007 Paris (FR)

(72) Inventors:
• Boccardi, Federico
20063 Cernusco sul Naviglio (IT)
• Aydin, Osman
70569 Stuttgart (DE)

(74) Representative: Kleinbub, Oliver
Alcatel-Lucent Deutschland AG
Intellectual Property & Standards
Lorenzstrasse 10
70435 Stuttgart (DE)

(54) **Method for performing retransmissions in a radio communication system, first transceiver apparatus, and second transceiver apparatus thereof**

(57)     The invention relates to a method for performing retransmissions in a radio communication system (RCS). The method contains the steps of transmitting data via a first radiation beam (B4) from a first transceiver apparatus (TRA1) to a second transceiver apparatus (TRA2), and retransmitting the data or a part of the data via a second radiation beam (B1) from the first transceiver apparatus (TRA1) to the second transceiver apparatus (TRA2). The invention further relates to a first transceiver apparatus (TRA1) and to a second transceiver apparatus (TRA2).

FIG. 1

EP 2 645 592 A1

**Description**

**FIELD OF THE INVENTION**

The invention relates to radio communication and, more particularly but not exclusively, to retransmissions in a radio communication system.

**BACKGROUND**

Radio communication systems provide users of mobile stations connectivity nearly everywhere and at every time. This connectivity is provided by radio frequency signals, which are transmitted from antenna systems of a radio communication system to a mobile station owned by the user and which are transmitted from the mobile station to the antenna systems of the radio communication system. Transmission parameters for a wireless transmission from a first transceiver to a second transceiver such as pre-coding, frequency band, bandwidth, modulation scheme, etc. are usually adapted to a current characteristic of a transmission channel from the first transceiver to the second transceiver.

At a transmit antenna system, that contains two or more antenna elements, several radiation beams may be used by applying for each radiation beam a different set of antenna weights for antenna elements of the transmit antenna system. Such a set of antenna weights is also called a pre-coding vector. Usually, a pre-coding vector is chosen at a base station for a mobile station in such a way that the received signal power is maximized at the mobile station.

For radio communications in a 60 GHz frequency range, which is equal to a millimetre wavelength range, technical aspects such as range of coverage and line of sight reception have to be taken into account much more than in a 2.4 to 5 GHz frequency range, which is conventionally applied for example in 3G radio access technologies (3G = Third Generation) such as UMTS (UMTS = Universal Mobile Telecommunication Systems) or LTE (LTE = Long Term Evolution).

The range of coverage problem can be solved by using a beamforming technique based on pre-coding vectors as mentioned above for providing a coverage range extension. Thereby, a received signal power can be increased considerably in comparison to a use of a single omnidirectional antenna.

Regarding the line of sight problem in the 60 GHz frequency range, an LOS link (LOS = Line- Of- Sight) or LOS beam can be easily blocked by a person, which moves to a position, which is on a direct link between a transmitter and a receiver. Thereby, a transmission of data may be easily blocked or may be easily received with errors. An LOS link or an LOS propagation characteristic means the ability to visually see a transmitting antenna (disregarding the limitations of the eye's resolution) from a current position of a receiving antenna. For radio frequency signals transmitted by an LOS link, a main transmitting direction and a main receive direction are identical. Contrary to that, a non- LOS link or a non- LOS propagation characteristic means the inability to visually see the transmitting antenna from the current position of the receiving antenna. For radio frequency signals transmitted by a non- LOS link, the main transmitting  direction and the main receive direction are different, because the radio frequency signals have been reflected or scattered on a transmission path from the transmitting antenna to the receiving antenna.

**SUMMARY**

The way of circumventing LOS problems in short range radio communication affects a capacity of the radio communication system and a user perception regarding the quality of the radio communication system.

Therefore, it is an object of the invention to improve a spectral efficiency and capacity in a radio communication system as well as the user perception.

The object is achieved by a method for performing retransmissions in a radio communication system. The method contains the steps of transmitting data via a first radiation beam from a first transceiver apparatus to a second transceiver apparatus, and retransmitting the data or a part of the data via a second radiation beam from the first transceiver apparatus to the second transceiver apparatus.

The object is further achieved by a first transceiver apparatus and by a second transceiver apparatus. The first transceiver apparatus may be for example a base station, a femtocell, a picocell or a computerized device such as a computer monitor, a keyboard, a television, a printer, a telephone, or a personal digital assistant.

The second transceiver apparatus may be for example a mobile station or a further computerized device such as mentioned above. The data may be for example user data of an application running at the mobile station such as a video application. The retransmitting step may be based for example on a hybrid automatic repeat request mechanism. The first radiation beam and the second radiation beam may be separated by a space-division multiple access mechanism. The radio communication system may be for example a wireless personal area network or a wireless body area network.

The method offers a first benefit of increasing a spectral efficiency as well as a capacity in a radio communication system by increasing a chance of a successful retransmission, if a reception of the first radiation beam, which is primarily used for the transmission between the first transceiver apparatus and the second transceiver apparatus, is shadowed by an obstacle temporarily.

The method offers a second benefit of increasing user perception because data can be transmitted to the mobile station with fewer retransmissions as compared to conventional retransmissions.

The method offers a third benefit of handling a degradation of a transmission quality of a radiation beam inside the first transceiver apparatus and not needing for example an inter-cell handover to a neighbouring transceiver apparatus, which may impact a scheduling and transmission to further mobile stations, which may require a complete new reassignment between radiation beams and mobile stations and which may result in a transmission delay.

According to a first embodiment, the first radiation beam may be directed into a first transmission direction and the second radiation beam may be directed into a second transmission direction, which is different to the first transmission direction. The first radiation beam may be for example a line- of- sight radiation beam and the second radiation beam may be for example a non- line- of- sight radiation beam. By using reflecting and/or scattering effects affecting on transmitted radio frequency signals a chance for a successful retransmission can be increased by the first embodiment.

According to a preferred first embodiment, the second radiation beam is selected, if an angular distance between the first transmission direction and the second transmission direction is equal to or above a predefined threshold. Thereby, a possibility for a successful retransmission is further increased, because a noticeable different transmission path may be used by the second radiation beam for the radio frequency signals from the first transceiver apparatus to the second transceiver apparatus.

According to a second embodiment, which may be applied in addition to the first embodiment, the first radiation beam may be transmitted with a first angular beam spread and the second radiation beam may be transmitted with a second angular beam spread, which is larger than the first angular beam spread. Also in this case, a chance for a successful retransmission can be increased by using reflecting and/or scattering effects of the expanded and broadened second radiation beam.

Regarding a first technical implementation for the second embodiment, the method may further contain the steps of choosing a pre-coding vector from a first pre-coding codebook for the first radiation beam, and choosing a further pre-coding vector from a second pre-coding codebook for the second radiation beam. Thereby, the angular beam spread is controlled and modified by using different sets of pre-coding vectors.

For a second technical implementation of the second embodiment, the first radiation beam may be transmitted by a first number of antenna elements of an antenna system, which is controlled by the first transceiver apparatus and the second radiation beam may be transmitted by a second number of antenna elements of the antenna system and the second number of antenna elements is smaller than the first number of antenna elements. In this case, the angular beam spread is controlled and modified by using different numbers of antenna elements of the antenna system for transmitting the radio frequency signals.

According to a preferred embodiment, the method further contains the steps of determining at the second transceiver apparatus a radiation beam ranking for at least two radiation beams such as the first radiation beam, the second radiation beam and at least one further radiation beam, transmitting from the second transceiver apparatus to the first transceiver apparatus information of the radiation beam ranking, and selecting at the first transceiver apparatus the second radiation beam based on the radiation beam ranking. Thereby, a most suitable radiation beam can be selected for the retransmission. Preferably, the information of the radiation beam ranking contains one or several indications for one or several radiation beams preselected by the second transceiver apparatus. If two or more radiation beams are indicated by the second transceiver apparatus, the first transceiver apparatus has more flexibility in choosing the second transmission beam because it allows considering also radio conditions and pending data traffic for further transceiver apparatuses, which await data from the first transceiver apparatus. More preferably, the information of the radiation beam ranking further contains a quality value for the preselected at least one radiation beam. The quality value may be for example a signal- to- noise ratio or a signal- to- noise- and- interference ratio. The additional reporting of the quality values allows for a better  comparison between the reported and potential radiation beams at the first transceiver apparatus for the retransmission of the data or the part of the data.

According to a further preferred embodiment, the information of the radiation beam ranking is transmitted in a single message with a non-acknowledgement for the data. This allows for a very flexible retransmission method, which may select an adequate radiation beam for each required retransmission. According to an even further preferred embodiment, the method further contains the step of transmitting reference signals from the at least two antenna elements of the antenna system via the first radiation beam, via the second radiation beam and via the at least one further radiation beam to the second transceiver apparatus and the radiation beam ranking is based on a reception quality of the reference signals. Thereby, the reception quality of the reference signals provides adequate quality information for selecting a different radiation beam for the retransmission than used for the initial transmission.

In a further preferred embodiment, the first transceiver apparatus may contain the antenna system and the antenna system may be aligned for a primarily vertical downwards direction of propagation of the first radiation beam and the second radiation beam. Such a vertical downwards direction may be achieved for example by mounting the antenna system on a ceiling. The ceiling may be for example a ceiling of a large hall such as an airport terminal, a hangar, a station concourse, an exhibition hall, a concert hall, a multi-purpose hall, or a factory building.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows schematically a mobile radio access point, which provides wireless coverage in an indoor environment according to a first embodiment of the invention.

Figure 2 shows schematically the mobile radio access point, which provides wireless coverage in the indoor environment according to a second embodiment of the invention.

Figure 3 shows schematically a flow diagram of a generic method in accordance to the embodiments of the invention.

Figure 4 shows schematically a block diagram of a first wireless transceiver apparatus according to the embodiments of the invention.

Figure 5 shows schematically a block diagram of a second wireless transceiver apparatus according to the embodiments of the invention.

## DESCRIPTION OF THE EMBODIMENTS

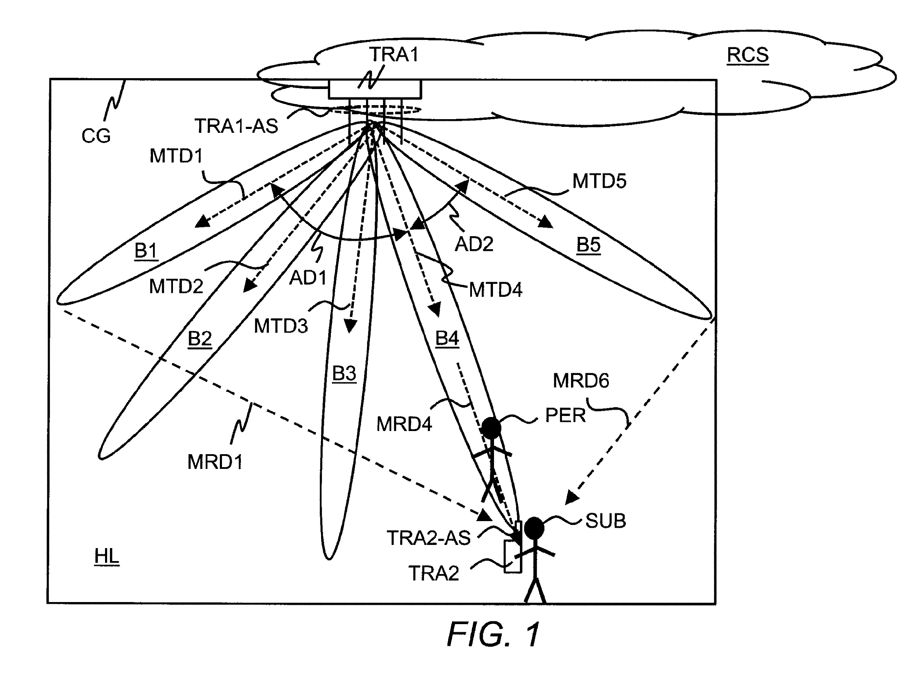

Figure 1 shows schematically an indoor environment HL and a radio communication system RCS according to a first embodiment of the invention.

The indoor environment HL may be for example a large hall such as an airport terminal, a hangar, a station concourse, an exhibition hall, a concert hall, a multi-purpose hall, or a factory building.

The radio communication system RCS may be for example a WLAN (WLAN = wireless local area network) based for example on one of the IEEE 802.11 standards, a WiMAX network (WiMAX = Worldwide Interoperability for Microwave Access) such as one of the IEEE 802.16 family of wireless-networks standards ratified by the WiMAX Forum or a wide area network such as a 3GPP LTE access network. According to further alternatives, the radio communication system RCS may be a WPAN (WPAN = Wireless Personal Area Network) such as defined by IEEE 802.15.3 Task Group 3c (IEEE = Institute of Electrical and Electronics Engineers), a WBAN (WBAN = Wireless Body Area Network) or a BSN (BSN = Body Sensor Network).

Regarding the exemplarity embodiment shown in Figure 1, the radio communication system RCS comprises a first wireless transceiver apparatus TRA1. Further details of the radio communication system RCS such as further wireless transceiver apparatuses and network nodes of a core network such as a HSS (HSS = Home Subscriber Server) are not shown for simplification.

According to a further alternative, the first wireless transceiver apparatus TRA1 may be connected externally to the radio communication system RCS such as a femtocell, which is located in a residence of a subscriber for radio communication services.

The first wireless transceiver apparatus TRA1 may be for example a mobile radio access point such as shown in Figure 1. The term "mobile radio access point" may be considered synonymous to and/or referred to as a base transceiver station, access point base station, access point, macrocell, microcell, femtocell, picocell etc. and may describe equipment that provides wireless connectivity via one or more radio links to one or more mobile stations. The mobile radio access point may be for example an IEEE 802.15.3 access point, an LTE eNodeB, an IEEE 802.11 access point, or a WiMAX base station. In case of IEEE 802.15.3, the mobile radio access point transmits and receives radio frequency signals in a millimetre-wavelength range with a frequency in a 60 GHz unlicensed band.

According to a further alternative, the first wireless transceiver apparatus TRA1 may be a mobile station. The term "mobile station" may be considered synonymous to, and may hereafter be occasionally referred to, as a mobile unit, mobile user, access terminal, user equipment, subscriber, user, remote station etc. The mobile station may be for example a cellular telephone, an LTE smart phone, a portable computer such as a notebook with a WLAN and/or an LTE interface card, a USB data sticks (USB = Universal Serial Bus) with a WLAN and/or an LTE interface, a pocket computer, a hand-held computer, a personal digital assistant, or an integrated circuit, which can be implemented in any portable device.

According to an even further alternative, the first wireless transceiver apparatus TRA1 may be a computerized device such as such as a monitor, a computer keyboard, a loud speaker etc.

According to Figure 1, the first wireless transceiver TRA1 is mounted at a celing CG of the indoor environment HL. Alternatively, the first wireless transceiver TRA1 may be mounted at an upper part of a wall of the indoor environment HL or at an upper part of a pylon, which stands on a basement of the indoor environment HL. In a further alternative, the first wireless transceiver TRA1 may be located on a table or may be hold in a hand by a person. According to further alternatives, the first wireless transceiver TRA1 may be also applied in an outdoor environment.

The first wireless transceiver TRA1 contains an antenna system TRA1-AS or may be connected per remote to an external antenna system. The antenna system TRA1-AS may provide wireless coverage for a coverage area such as a so-called radio cell. The term "radio cell" may be considered synonymous to, and may hereafter be occasionally referred to, as a cell, sector, or radio sector. One radio cell (see Figure 1) or several overlapping radio cells may cover the whole indoor environment HL.

The antenna system TRA1 -AS contains for example four antenna elements as shown in Figure 1. Alternatively, the antenna system TRA1-AS may contain two antenna elements or more than four antenna elements.

The present invention is based on a radiation of different so-called radiation beams or radiation lobes into different predefined directions. A possible solution for providing radiation beams into predefined directions is to use pre-defined beamforming weights at each antenna element, which have been calculated in a way to direct transmission power towards desired directions. The transmission power is generally radiated towards a direction that is associated to a predefined pre-coding vector".

For example, in LTE such a provisioning of radiation beams can be obtained by using a so-called codebook, which contains two or more so-called predefined pre-coding vectors, which are known at the first wireless transceiver TRA1 as a transmitter and at a second wireless transceiver apparatus TRA2 as a receiver. Thereby, radio frequency signals are transmitted from the antenna system TRA1-AS by applying for example a three-dimensional beamforming with for example five radiation beams B1, B2, B3, B4, B5. Alternatively, two, three, four or more than six radiation beams may be generated and radiated by the antenna system TRA1-AS.

Following equation (1) provides as an example a so-called DFT codebook (DFT = discrete Fourier transform), which represents a phased-array channel and which is for example described in "System-level simulation results for channel vector quantisation feedback for MU-MIMO," Philips, 3GPP TGS RAN WG1, R1-063028, Nov. 2006.

$$
DFT(8) = \begin{bmatrix}
1 & 1 & 1 & 1 & 1 & 1 & 1 & 1 \\
1 & e^{-j\frac{2\pi}{8}} & e^{-j2\pi\frac{2}{8}} & e^{-j2\pi\frac{3}{8}} & e^{-j2\pi\frac{4}{8}} & e^{-j2\pi\frac{5}{8}} & e^{-j2\pi\frac{6}{8}} & e^{-j2\pi\frac{7}{8}} \\
1 & e^{-j2\pi\frac{2}{8}} & e^{-j2\pi\frac{4}{8}} & e^{-j2\pi\frac{6}{8}} & e^{-j2\pi\frac{8}{8}} & e^{-j2\pi\frac{10}{8}} & e^{-j2\pi\frac{12}{8}} & e^{-j2\pi\frac{14}{8}} \\
1 & e^{-j2\pi\frac{3}{8}} & e^{-j2\pi\frac{6}{8}} & e^{-j2\pi\frac{9}{8}} & e^{-j2\pi\frac{12}{8}} & e^{-j2\pi\frac{15}{8}} & e^{-j2\pi\frac{18}{8}} & e^{-j2\pi\frac{21}{8}} \\
1 & e^{-j2\pi\frac{4}{8}} & e^{-j2\pi\frac{8}{8}} & e^{-j2\pi\frac{12}{8}} & e^{-j2\pi\frac{16}{8}} & e^{-j2\pi\frac{20}{8}} & e^{-j2\pi\frac{24}{8}} & e^{-j2\pi\frac{28}{8}} \\
1 & e^{-j2\pi\frac{5}{8}} & e^{-j2\pi\frac{10}{8}} & e^{-j2\pi\frac{15}{8}} & e^{-j2\pi\frac{20}{8}} & e^{-j2\pi\frac{25}{8}} & e^{-j2\pi\frac{30}{8}} & e^{-j2\pi\frac{35}{8}} \\
1 & e^{-j2\pi\frac{6}{8}} & e^{-j2\pi\frac{12}{8}} & e^{-j2\pi\frac{18}{8}} & e^{-j2\pi\frac{24}{8}} & e^{-j2\pi\frac{30}{8}} & e^{-j2\pi\frac{36}{8}} & e^{-j2\pi\frac{42}{8}} \\
1 & e^{-j2\pi\frac{7}{8}} & e^{-j2\pi\frac{14}{8}} & e^{-j2\pi\frac{21}{8}} & e^{-j2\pi\frac{28}{8}} & e^{-j2\pi\frac{35}{8}} & e^{-j2\pi\frac{42}{8}} & e^{-j2\pi\frac{49}{8}}
\end{bmatrix} \quad (1)
$$

The codebook size is very simply constructed by extracting the top M rows of the DFT matrix of size N, where N is the codebook size. An exemplarily codebook is highlighted by the dotted line for 2 transmit antennas and a 3-bit quantisation. A further exemplarily codebook is highlighted by the dashed line for 4 transmit antennas and also a 3-bit quantisation.

A transmission characteristic of each radiation beam B1, B2, B3, B4, B5 is given by the predefined beamforming weights of a corresponding pre-coding vector. A first main transmission direction MTD1 of a first radiation beam B1, a second main transmission direction MTD2 of a second radiation beam B2, a third main transmission direction MTD3 of a third radiation beam B3, a fourth main transmission direction MTD4 of a fourth radiation beam B4 and a fifth main transmission direction MTD5 of a fifth radiation beam B5 are transmission directions with a maximum transmission power for the radiation beams B1, B2, B3, B4, B5. Each of the main transmission directions MTD1, MTD2, MTD3, MTD4, MTD5 is different to the other main transmission directions MTD1, MTD2, MTD3, MTD4, MTD5.

SDMA with codebooks and predefined pre-coding vectors is described for example in the standardization document 3GPP TS 36.211.

A first person SUB, who operates the second wireless transceiver apparatus TRA2, is located at a specific distance from the antenna system TRA1-AS within the fourth main transmission direction MTD4 of the fourth radiation beam B4.

The second wireless transceiver apparatus TRA2 may be for example a mobile station. Alternatively, the second wireless transceiver apparatus TRA2 may be a mobile radio access point or a computerized device such as described above.

The second wireless transceiver apparatus TRA2 contains an antenna system TRA2-AS or may be connected to an external antenna system. The antenna system TRA2-AS contains a single antenna element. In further alternatives, the antenna system TRA2-AS may contain two antenna elements or more than two antenna elements.

The second wireless transceiver apparatus TRA2 may have an active radio connection with the first wireless transceiver apparatus TRA1 for transmitting for example a video to the second wireless transceiver apparatus TRA2. Due to a current location of the second wireless transceiver apparatus TRA2 the first wireless transceiver apparatus TRA1 has selected a corresponding predefined pre-coding vector for using the fourth radiation beam B4.

Initially, the radio frequency signals are received at the second wireless transceiver apparatus TRA2 by a main receiving direction MRD4 without any distortion. As there are no obstacles in a transmission path of the radio frequency signals from the first wireless transceiver apparatus TRA1 to the second wireless transceiver apparatus TRA2 the fourth main transmission direction MTD4 and the main receiving direction MRD4 are identical. This means that the radio frequency signals are received via a shortest direct transmission path as an LOS transmission. For data units such as radio frames (see for example "3G evolution: HSPA and LTE for Mobile Broadband" Erik Dahlman et al. 2nd edition, Academic Press; section 16.1), which are transmitted by allocated radio resource units such as PRBs (PRB = Physical Resource Block) used in LTE and which are not received error- free at the second wireless transceiver apparatus TRA1 a retransmission or several retransmissions is/are applied. The retransmission may be based for example on an ARQ mechanism (ARQ = Automatic Repeat Request) or an HARQ mechanism (HARQ = Hybrid Automatic Repeat Request) (see for example "3G evolution: HSPA and LTE for Mobile Broadband" Erik Dahlman et al. 2nd edition, Academic Press; section 7.4) . The retransmission or the retransmissions are transmitted via the same fourth radiation beam B4. For the retransmissions same parity bits, same parity bits and new parity bits or only new parity bits may be included and a same number of bits of the data unit, a smaller number of bits of the data unit or no bits of the data unit may be provided by the retransmission.

Then suddenly an obstacle may appear such as a person PER in the shortest direct transmission path from the first wireless transceiver apparatus TRA1 to the second wireless transceiver apparatus TRA2. In such a case, a transmission quality of the transmission channel via the fourth radiation beam B4 decreases and a transmission error rate increases. The decrease of the transmission quality may be overcome for example by following two possibilities:

According to a first possibility, the first wireless transceiver apparatus TRA1 might chose and switch the initial transmissions and retransmissions to another radiation beam by performing an intra-cell radiation beam handover. The first radiation beam B1 and the fifth radiation beam B5 might be chosen for the handover, because the radio frequency signals, which are transmitted via the radiation beams B1, B5 can be received at the current location of the second wireless transceiver apparatus TRA2 with main receiving directions MRD1, MRD5 by exploiting reflections of the radio frequency signals at walls of the indoor environment HL. Regarding the current orientation of the user SUB of the first wireless transceiver apparatus TRA1 the body and head of the user SUB might block or disturbs a reception of the radio frequency signals via the fifth radiation beam B5 and a fifth main receiving direction MRD5 much more than via the first radiation beam B1 and a first main receiving direction MRD1. If the first radiation beam B1 is not applied for transmissions to a further wireless transceiver apparatus or if there are sufficient free radio resources for transmissions to two wireless transceiver apparatuses, the first wireless transceiver apparatus TRA1 might decide for a radiation beam handover from the fourth radiation beam B4 to the first radiation beam B1.

According to a second possibility and to the first embodiment of the invention, the initial transmissions may be provided further on via the fourth radiation beam B4 and any retransmissions may be provided via the first radiation beam B1. The first embodiment may be used, if any other radiation beams are used for providing transmissions to further wireless transceiver apparatuses, if there are not sufficient unused radio resources at the other radiation beams for overtaking a complete additional transmission to a further wireless transceiver apparatus and/or if a re-assignment of wireless transceiver apparatuses to radiation beams is not suitable or possible. In such a case, the initial transmissions are provided by a LOS link and the retransmissions are provided by a non-LOS link.

The first radiation beam B1 is preferably selected, if an angular distance AD1 between the fourth radiation beam B4 and the first radiation beam B1 is within a predefined angular range or is equal to or above a predefined angular distance threshold. Exemplarily, the predefined angular range may be for example between 40 ° and 70 ° or the predefined angular distance threshold may be 40 °, 50 ° or 60 °. The fifth radiation beam B5 might has not been selected for the retransmissions because an angular distance AD2 between the fifth radiation beam B5 and the first radiation beam B1 is smaller than the predefined angular distance threshold.

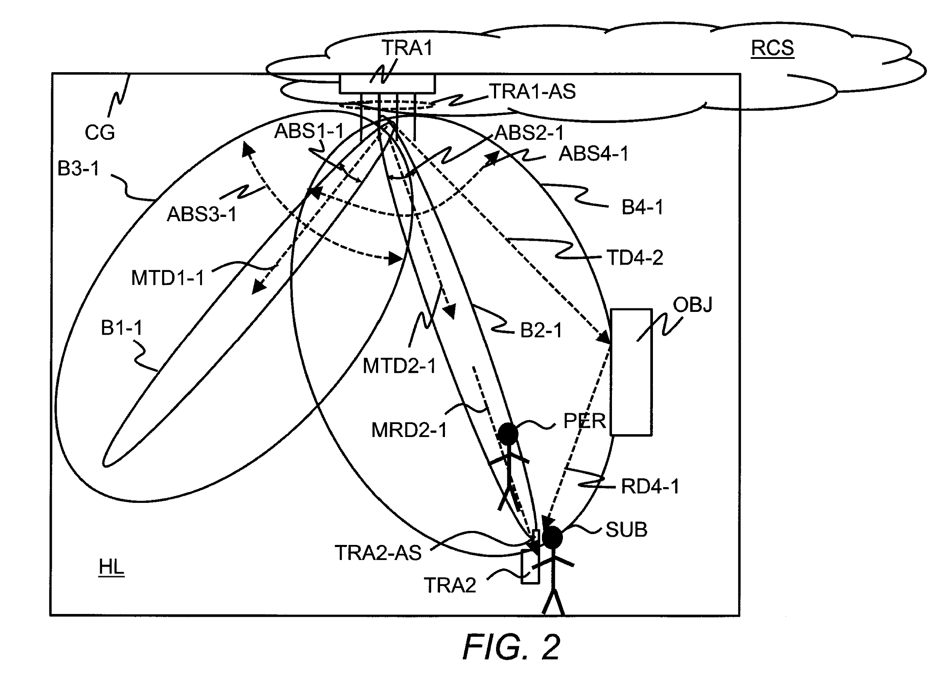

Figure 2 shows schematically the indoor environment HL and the radio communication system RCS according to a second embodiment of the invention. The elements in Figure 2 that correspond to elements of Figure 1 have been designated by same reference numerals.

In comparison to the first embodiment, a first codebook for pre-coding vectors and a second codebook for further pre-coding vectors may be predefined and stored at the first wireless transceiver apparatus TRA1 and the second wireless transceiver apparatus TRA2.

A first set of pre-coding vectors of the first codebook is used to generate a first radiation beam B1-1 and a second radiation beam B2-1. Alternatively, three or more radiation beams may be generated by the first set of pre-coding vectors.

The first radiation beam B1-1 is generated with a first angular beam spread ABS1-1 and with a first main transmission direction MTD1-1 and the second radiation beam B2-1 is generated with a second angular beam spread ABS2-1 and with a second main transmission direction MTD2-1. The first angular beam spread ABS1-1 and the second angular beam spread ABS2-1 may be identical or different.

A second set of pre-coding vectors of the second codebook is used to generate a third radiation beam B3-1 with a same main transmission direction as applied for the first radiation beam B1-1 and to generate a fourth radiation beam B4-1 with a same main transmission direction as applied for the second radiation beam B2-1, Alternatively, three or more radiation beams may be generated by the second set of pre-coding vectors.

The third radiation beam B3-1 is generated with a third angular beam spread ABS3-1 and the fourth radiation beam B4-1 is generated with a fourth angular beam spread ABS4-1. The third angular beam spread ABS3-1 and the second angular beam spread ABS4-1 may be identical or different and may be for example four times larger than the first angular beam spread ABS1-1 and the second angular beam spread ASB2-1.

A main transmission direction of radiation beams B1-2, B2-1, B3-1, B4-1 and a size of the angular beam spreads ABS1-1, ABS2-1, ABS3-1, ABS4-1 may be adjusted by choosing adequate values for the pre-coding vectors of the first codebook and the second codebook. The pre-coding vectors contain different complex weights for both, phase and amplitude, for each of the antenna elements of the antenna system TRA1-AS. The main transmission direction is controlled by applying adequate different phase shifts to the radio frequency signals to be transmitted and the angular beam spread is controlled by applying adequate different transmit codebooks.

Alternatively, the angular beam spread may be controlled by varying a number of antenna elements to be used for transmitting the radio frequency signals. Exemplarily, for the first set of pre- coding vectors of the first codebook four antenna elements of the antenna system TRA1-- AS are used for transmitting the radio frequency signals and for the second set of pre- coding vectors of the second codebook two antenna elements of the antenna system TRA1- AS are used for transmitting the radio frequency signals. A given implementation would rely for example on using codebooks with zeros on some antenna elements to widen the angular beam spread for the third radiation beam B3- 1 and the fourth radiation beam B4- 1. At first and similar to the first embodiment, radio frequency signals for a transmission of user data and/or signalling data to the second wireless transceiver apparatus TRA2 are transmitted from the first wireless transceiver apparatus TRA1 via the second radiation beam B2- 1 and with a main transmission direction MTD2- 1 and are received at the second wireless transceiver apparatus TRA2 by a main receiving direction MRD2- 1 without any distortion. As there are no obstacles in a transmission path of the radio frequency signals from the first wireless transceiver apparatus TRA1 to the second wireless transceiver apparatus TRA2 the main transmission direction MTD2- 1 and the main receiving direction MRD2- 1 are identical. Initial transmissions for the user data and/or the signalling data and retransmissions for the user data and/or the signalling data are transmitted via the second radiation beam B2- 1.

Then suddenly the person PER appears as an obstacle in the shortest direct transmission path from the first wireless transceiver apparatus TRA1 to the second wireless transceiver apparatus TRA2.

Due to an increase of defective initial transmissions and a corresponding requirement of a higher amount of retransmissions, the second wireless transceiver apparatus TRA2 switches the retransmissions from the second radiation beam B2-1 to the fourth radiation beam B4-1, which is suitable regarding a current location of the second wireless transceiver apparatus TRA2. A selection for the fourth radiation beam B4-1 may be based on a reporting of so-called CQI values (CQI = Channel Quality Indicator) by the second wireless transceiver apparatus TRA2 for reference signals or pilots, which have been transmitted from the first wireless transceiver apparatus TRA1 via the fourth radiation beam B4-1 to the second wireless transceiver apparatus TRA2. Alternatively, the selection of the fourth radiation beam B4-1 may be based on criterion, that a pre-coding vector of the second codebook should be selected with a main transmission direction, which is most identical to a main transmission direction of a radiation beam of a pre-coding vector of the first codebook.

As can be seen in Figure 2, due to the confinement of the second radiation beam B2-1 by applying the second angular beam spread ABS2-1 the radio frequency signals may be reflected only with a small amount at an object OBJ, which is located within the indoor environment HL. The object OBJ may be for example a dividing wall, a board or any other item, which is capable to reflect or scatter radio frequency signals. The fourth radiation beam B4-1 transmits contrary to the second radiation beam B2-1 also a sufficient amount or radiated power in a transmission direction TD4-2 to a location of the object OBJ. A part of the radiated power is reflected at the object OBJ and is received at the second wireless transceiver apparatus TRA2 by a receiving direction RD4-2. Thereby in comparison to the second radiation beam B2-1, more radiated power of the fourth radiation beam B4-1 can be received at the second wireless transceiver apparatus TRA2 with a higher chance of success for error-free retransmissions.

Regarding the second embodiment, the first codebook is applied for the initial transmissions and the second codebook is applied for the retransmissions.

The first embodiment according to Figure 1 and the second embodiment regarding Figure 2 may be also applied simultaneously. This means, that the third radiation beam B3-1 has a different main transmission direction than the main transmission direction MTD1-1 of the first radiation beam B1-1 and the fourth radiation beam B4-3 has a different main transmission direction than the main transmission direction MTD2-1 of the second radiation beam B2-1.

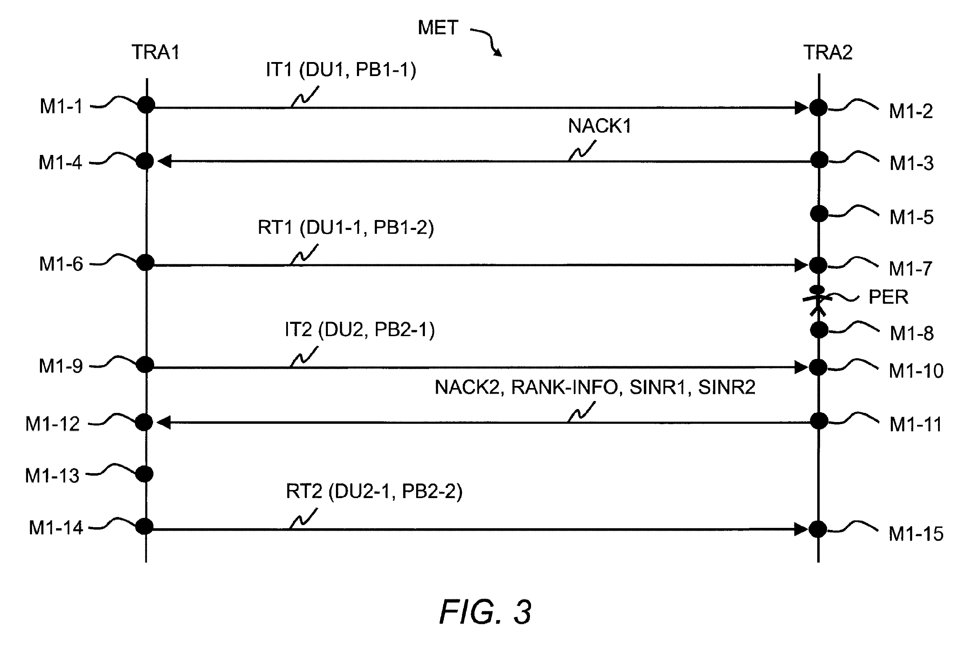

The invention is now described in further detail with respect to Figure 3 and corresponding description.

Referring to Figure 3 a flow diagram of a generic method MET in accordance to several embodiments of the invention is shown. The number of the steps for performing the method MET is not critical, and as can be understood by those skilled in the art, that the number of the steps and the sequence of the steps may vary without departing from the scope of the present invention as defined in the appended claims, e.g. some of the steps may be performed simultaneously (e.g. steps M1-6 and M1-9) or some of the steps may be performed in an inverse sequence (e.g. step M1-5 may be performed before step M1-3) or some of the steps may be ignored (e.g. step M1-8).

The method MET1 is described regarding a retransmission for a downlink wireless transmission from the first wireless transceiver apparatus TRA1 as a base station to the second wireless transceiver apparatus TRA2 as a mobile station. Alternatively, the method MET1 may be also applied regarding a retransmission for an uplink wireless transmission from a mobile station to a base station, regarding a retransmission for a wireless transmission between two mobile stations in a so-called ad-hoc wireless network, regarding a retransmission for a wireless transmission between two base stations such as a first base station and a second base station, regarding a retransmission for a wireless transmission from a base station to a wireless relay station or from the wireless relay station to the base station or regarding a retransmission for a wireless transmission from a wireless relay station to a mobile station or from a mobile station to a wireless relay station. A wireless relay station usually relays wireless transmissions coming from a mobile station to a base station or wireless transmissions coming from a base station to a mobile station.

In a first step M1-1, the first wireless transceiver apparatus TRA1 transmits a first data unit DU1 and first parity bits PB1 by a first initial transmission IT1 to the second wireless transceiver apparatus TRA2 via the radiation beam B4 (see Figure 1) or via the radiation beam B2-1 (see Figure 2). The first initial transmission IT1 is received in a further step M1-2.

The second wireless transceiver apparatus TRA2 may store data of the received first initial transmission IT1 but may not be able to recover error-free the first data unit DU1. Therefore, the second wireless transceiver apparatus TRA2 may transmit on an uplink channel a first negative acknowledgement NACK1 for the first initial transmission IT1 in a next step M1-3, which is received by the first wireless transceiver apparatus TRA1 in a further step M1-4. The first wireless transceiver apparatus TRA1 uses the reception of the first negative acknowledgement NACK1 as an indication, that the first data unit DU1 has not been recovered error-free based on the received first initial transmission IT1. Alternatively, the first wireless transceiver apparatus TRA1 may wait for a predefined time after transmitting the first initial transmission IT1 and if the first wireless transceiver apparatus TRA1 does not receive any acknowledge or non-acknowledgement for the first initial transmission IT1, first wireless transceiver apparatus TRA1 may use this non-reception as an alternative indication, that the first data unit DU1 has not been recovered error-free based on the received first initial transmission IT1.

The first wireless transceiver apparatus TRA1 may periodically transmit so-called beacons or pilots via the radiation beams B4, B2-1 (not shown in Figure 3 for simplification). The second wireless transceiver apparatus TRA2 receives the beacons or pilots, measures a reception quality of the beacons or pilots and may determine SNR values (SNR = Signal to Noise Ratio), SINR values (SINR = Signal to Infierference-plus-Noise Ratio) and/or CQI values (see for example European Patent EP 2166807 B2). The second wireless transceiver apparatus TRA2 may periodically compare new determined SNR values, SINR values and/or CQI values for a subset or all pre-coding vectors of the codebook (regarding Figure 1) or of the second codebook (regarding Figure 2) with previously determined and buffered SNR values, SINR values and/or CQI values.

In a next step M1-5, the second wireless transceiver apparatus TRA2 may sort the pre-coding vectors of the radiation beams based on a given metric (for example the SINR value) and may determine a radiation beam ranking. An example of such a radiation beam ranking is given in following Table 1 for the first embodiment of Figure 1:

Table 1: Mapping of determined SINR values and pre-selections to beam indexes of radiation beams The radiation beam ranking may be based for example on following algorithm: In a first sub-step, a best radiation beam $w^*$ may be calculated for example based on following equation:

| Beam Index | SINR value | RANK | PRESELECTED |
|---|---|---|---|
| B1 | 10 | 1 | YES |
| B2 | 6 | 2 | YES |
| B3 | 7 | 4 | No |
| B4 | 4 | N.A. | No |
| B5 | 6 | 3 | No |

$$w^* = \arg\max_{w \in W} SINR_w \qquad (2)$$

with $SINR_w$ with = SINR value of the radiation beam with index $w$, and $W$ indicates the codebook of candidate beams. Alternative a chordal distance may be used rather than an SINR maximation criterion as for example given by equation (5) in "User Selection Schemes for MIMO Broadcast Channels with Limited Feedback", M. Trivellato et al., Vehicular Technology Conference, Dublin, VTC2007-Spring. IEEE 65th, pages 2089 - 2093, 22-25 April 2007. In a second sub-step, the best radiation beam $w^*$ will be ranked based on an angular distance to a currently used radiation beam. If for example, the best radiation beam $w^*$ is not a direct neighbor and a third closest neighbor to the currently used radiation beam the best radiation beam $w^*$ will be given a rank 1. If for example, the best radiation beam $w^*$ is not a direct neighbor and second closest neighbour to the currently used radiation beam the best radiation beam $w^*$ will be given a rank 2. If otherwise, the best radiation beam $w^*$ is a direct neighbor to the currently used radiation beam, the best radiation beam $w^*$ will be given a rank 3 or lower. The first and the second sub-step are then repeated for the remaining radiation beams. For a next best radiation beam $w^*$ of the remaining radiation beams the ranking position may be reduced automatically by 1, because of the second run of the first and the second sub-step. Similarly, for further best radiation beam $w^*$ the ranking position may be reduced automatically by further ones corresponding to a number of the run.

The beam indexes correspond to the reference signs in Figure 1. A smaller rank number indicates a more preferable radiation beam for retransmissions. N.A. means that the radiation beam is not applicable for any retransmissions with respect to the invention because the initial transmissions are executed via the fourth radiation beam B4 (see Figure 1). "YES" means, that the second wireless transceiver apparatus TRA2 has pre-selected these beam indexes/radiation beams for any retransmissions and "NO" means, that the second wireless transceiver apparatus TRA2 has not pre-selected these further beam indexes/radiation beams for any retransmissions.

Estimating the SINR value for a given pre-coding vector is equivalent to estimating the SINR value for a direction corresponding to that pre-coding vector. By estimating the SINR value for each pre-coding vector, the receiver can rank the different directions in terms of received transmission power. The concept of receive/transmit direction applies best, when scatters are far from the receiver/transmitter. In case of rich scattering around the receiver/transmitter, the equivalence between received/transmit direction may be disturbed, but the determination of SINR values and the ranking beam ranking is still possible.

In a preferred embodiment the second wireless transceiver apparatus TRA2 may provide a lower rank to a radiation beam such as the third radiation beam B3 that is close to the fourth radiation beam B4, which is already chosen for the initial transmissions, in comparison to for example the fifth radiation beam B5 with a larger angular distance to the fourth radiation beam B4 even if the third radiation beam B3 provides a larger SINR value than the fifth radiation beam B5. Such a preferred ranking may solve the following problem: If the person PER moves to a further position, there is a higher probability, that the third radiation beam B3 is also blocked because the transmit paths of the third radiation beam B3 and the fourth radiation beam B4 are rather equal due to a small angular distance between both radiation beams. In comparison to that, the transmit path of the fifth radiation beam B5 is sufficiently different based on reflections, that the probability of blocking of the fifth radiation beam B5 is much lower. Whether a radiation beam is close or not may be determined from the angular distances AD1, AD2 (see Figure 1). A size of the angular distances AD1, AD2 between the radiation beams, for which reference signals or pilots have been received at the second wireless transceiver apparatus TRA2 with a sufficient SINR values, can be easily derived from the known beamforming weights as given for example in equation (1) (see above).

The preferred embodiment allows preselecting a radiation beam for the retransmission, which has an angular distance to the currently applied radiation beam for the initial transmission that is equal to or above the predefined angular distance threshold.

Alternatively, instead of determining the radiation beam ranking based on the SINR values, the radiation beam ranking may be based on a method such as proposed in X. An, C.- S. Sum, R.V. Prasad, J. Wang, Z. Lan, J. Wang, R. Hekmat, H. Harada, I. Niemegeers, "Beam switching support to resolve link- blockage problem in 60 GHz WPANs, " Proc. of IEEE Int. Symp. on Personal, Indoor and Mobile Radio Communications, 2009, Tokyo, Japan. The referenced method is based on a point- 2- point transmission from an access point to a user equipment. A downlink transmission link from the access point to the user equipment is assumed to be in general in an LOS link, while occasionally a blockage of the LOS link happens. In order to overcome this problem, the user equipment continuously monitors the SNR of the downlink transmission link and computes weight factors for each pre- coding vector (i.e. each radiation beam) with respect to the LOS link (or equivalently the corresponding radiation beam) . Based on these weight factors, and in case of an instantaneous SINR drop for the LOS link, the user equipment switches to a best alternative radiation beam.

The second wireless transceiver apparatus TRA2 may determine a new radiation beam ranking periodically with a predefined time period or may determine a new radiation beam ranking for each required retransmission or may determine a new radiation beam ranking, if a transmission quality for one of the radiation beams of the codebook has changed above a predefined threshold. The predefined threshold may be for example in case of LTE 3 dB.

In a further step M1-6, the first wireless transceiver apparatus TRA1 performs a first retransmission RT1 for the first data unit DU1 via the radiation beam B4 (see Figure 1) or via the radiation beam B2-1 (see Figure 2) for example for a subset of bits of the first data unit DU1-1 with second parity bits PB2, which have been not transmitted by the first initial transmission IT1. Such a retransmission is well known as incremental redundancy (see for example "3G evolution: HSPA and LTE for Mobile Broadband", Erik Dahlman et al. 2nd edition, Academic Press; section 7.4). In a next step M1-7, the retransmission RT1 is received at the second wireless transceiver apparatus TRA2 and the second wireless transceiver apparatus TRA2 may be capable to recover the first data unit DU1 based on the stored data of the received first initial transmission IT1 and based on the received first retransmission RT1.

After receiving the first retransmission RT1 the person PER may suddenly cross the transmission path of the radiation beam B4 (see Figure 1) or the transmission path of the radiation beam B2-1 (see Figure 2) and therefore a transmission quality via the radiation beams B4, B2-1 may considerably or drastically decrease.

Due to the decrease or the drastically decrease of the transmission quality by measuring and calculating for example considerably lower CQI values for the received reference signals, the second wireless transceiver apparatus TRA2 detects in a further step M1-8 a downlink degradation, which may be equal to or above a predefined degradation threshold. The predefined degradation threshold may be for example in case of LTE 3 dB.

In a next step M1-9, the first wireless transceiver apparatus TRA1 performs a second initial transmission IT2 for a second data unit DU2 and further first parity bits PB2-1 via the radiation beam B4 (see Figure 1) or via the radiation beam B2-1 (see Figure 2). The second initial transmission IT2 is received at the second wireless transceiver apparatus TRA2 by a further step M1-10. Due to the considerable or drastic degradation, the second wireless transceiver apparatus TRA2 is not able to recover the second data unit DU2, which was contained in the second initial transmission IT2. Therefore, the second wireless transceiver apparatus TRA2 may transmit similar to the step M1-3 in a next step M1-11 on the uplink channel a second negative acknowledgement NACK2 for the second initial transmission IT2, which is received by the first wireless transceiver apparatus TRA1 in a further step M1-12. Alternatively as for the first initial transmission IT1, the first wireless transceiver apparatus TRA1 may use a non-reception of the second negative acknowledgement NACK2 as an indication, that the second data unit DU2 has not been recovered error-free based on the received first initial transmission IT1.

Preferably, the second negative acknowledgement NACK2 and information of the radiation beam ranking may be contained in a same message, which is transmitted from the second wireless transceiver apparatus TRA2 to the first wireless transceiver apparatus TRA1. The information of the radiation beam ranking may contain for example indications for the beam indexes B1, B2, which have been preselected at the second wireless transceiver apparatus TRA2. A first position of a beam index may indicate a highest ranking and further positions of beam indexes may indicate lower rankings.

In a further preferred embodiment, the message may further contain one or more quality values for each of the preselected radiation beams such as the SINR values or the SNR values as mentioned above.

In an alternative, the second negative acknowledgement NACK2 and the information of the radiation beam ranking are transmitted by separate messages from the second wireless transceiver apparatus TRA2 to the first wireless transceiver apparatus TRA1. In a same way, the information of the radiation beam ranking and the one or more quality values may be transmitted by a same message or by different messages from the second wireless transceiver apparatus TRA2 to the first wireless transceiver apparatus TRA1.

In a further step M1-13, the first wireless transceiver apparatus TRA1 selects one of the preselected radiation beams (e.g. the radiation beam B1 regarding the Figure 1 or the radiation beam B2-2 regarding the Figure 2) for a second retransmission RT2 of the second initial transmission IT2 based on the received information of the radiation beam ranking.

Let's assume that three different beam indexes $b_0^{(k)}, b_1^{(k)}, b_2^{(k)}$ have been preselected and reported by the second wireless transceiver apparatus TRA2 and $\gamma_0^{(k)}, \gamma_1^{(k)}, \gamma_2^{(k)}$ are the corresponding SNR values or SINR values reported by the second wireless transceiver apparatus TRA2.

In one embodiment a scheduler of the first wireless transceiver apparatus TRA1 may couple together the second wireless transceiver apparatus TRA2 (with index j) and a further wireless transceiver apparatus (with index k) via the SDMA under a assumption that

$$b_m^{(k)} \neq b_n^{(j)} \ \forall \ m,n \qquad (3)$$

This condition would be more suitable than just assuming

$$b_0^{(k)} \neq b_0^{(j)}$$

as thereby any interference coming from reflected radiation beams and/or radiation beam collisions during retransmissions could be reduced or avoided.

In another embodiment, the scheduler may pair together the second wireless transceiver apparatus TRA2 (with index j) on beam index n and the further wireless transceiver apparatus (with index k) on beam m with m, n=0,1,2, if

$$\frac{\gamma_n^{(j)} - \gamma_m^{(j)}}{\gamma_n^{(j)}} > \xi_j \text{ and } \frac{\gamma_m^{(k)} - \gamma_n^{(k)}}{\gamma_m^{(k)}} > \xi_k \qquad (4)$$

where $\xi_j$ and $\xi_k$ are thresholds defined for the second wireless transceiver apparatus TRA2 (with index j) and the further wireless transceiver apparatus (with index k).

In a further step M1-14, the first wireless transceiver apparatus TRA1 performs the second retransmission RT2 for the second data unit DU2 via the radiation beam B4 (see Figure 1) or via the radiation beam B2-1 (see Figure 2) for example for a subset of bits of the second data unit DU2-1 with further second parity bits PB2-2, which have been not transmitted by the second initial transmission IT2. In a next step M1-15, the second retransmission RT2 is received at the second wireless transceiver apparatus TRA2 and the second wireless transceiver apparatus TRA2 may be capable to recover the second data unit DU2 based on the stored data of the received second initial transmission IT2 and based on the received second retransmission RT2.

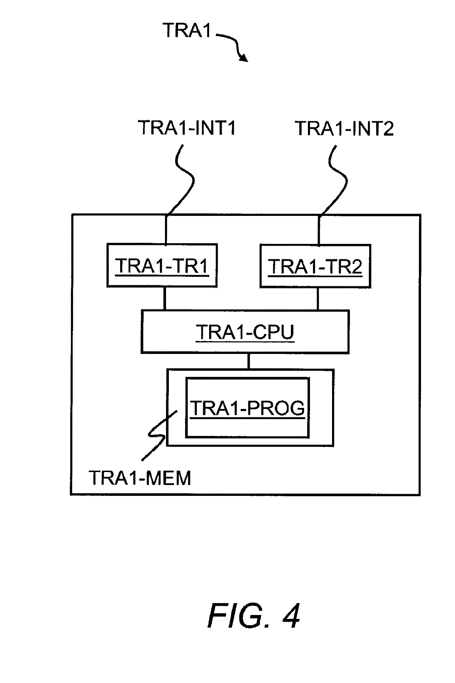

Referring to Figure 4 a block diagram of the first wireless transceiver apparatus TRA1 is shown. The first wireless transceiver apparatus TRA1 may contain a first interface TRA1-INT1, a first transceiver TRA1-TR1 connected to the first interface TRA1-INT1, a CPU TRA1-CPU connected to the first interface TRA1-INT1, and a computer readable medium TRA1-MEM. The antenna system TRA1-AS may be connected to the first interface TRA1-INT1. The first interface TRA1-INT1 and the first transceiver TRA2-TR1 are used to transmit the initial transmission IT1, IT2 and the retransmission RT1, RT2 and are further used to receive the negative acknowledgements NACK1, NACK2, the information of the radiation beam ranking and the quality values for the preselected radiation beams.

A computer readable program TRA1-PROG may be stored at the computer readable medium TRA1-MEM. The CPU TRA1-CPU is foreseen for executing the computer readable program TRA1-PROG. The computer readable program TRA1-PROG is foreseen for executing and controlling steps of the methods MET, which are related to the first wireless transceiver apparatus TRA1. The computer readable medium TRA1-MEM may store for example information of codebooks and pre-coding vectors.

If the first wireless transceiver apparatus TRA1 is a base station, the first wireless transceiver apparatus TRA1 further contains a second interface TRA1-INT2 and a second transceiver TRA1-TR2 connected to the second interface TRA1-INT2. Further network nodes of the radio communication system RCS such as further base stations or a serving gateway such as used in LTE may be connected for example to the second interface TRA1-INT2.

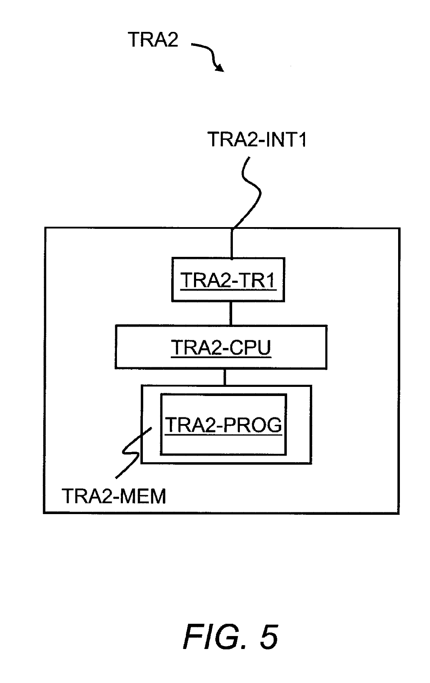

Referring to Figure 5 a block diagram of a second wireless transceiver apparatus TRA2 is shown. The second wireless transceiver apparatus TRA2 may contain a first interface TRA2-INT1, a first transceiver TRA2-TR1 connected to the first interface TRA2-INT1, a CPU TRA2-CPU connected to the first interface TRA2-INT1, and a computer readable medium TRA2-MEM. The antenna system TRA2-AS may be connected to the first interface TRA2-INT1.

A computer readable program TRA2-PROG may be stored at the computer readable medium TRA2-MEM. The CPU TRA2-CPU is foreseen for executing the computer readable program TRA2-PROG. The computer readable program TRA2-PROG is foreseen for executing and controlling steps of the method MET which are related to the second wireless transceiver apparatus TRA2.

The computer readable medium TRA2-MEM may store information of the codebooks and pre-coding vectors and may store information of the table 1 in a respective data array.

The first interface TRA2-INT1 and the first transceiver TRA2-TR1 are used to transmit the negative acknowledgements NACK1, NACK2, the information of the radiation beam ranking and the quality values for the preselected radiation beams and are used to receive the initial transmission IT1, IT2 and the retransmission RT1, RT2.

A person of skill in the art would readily recognize that steps of the method MET of the above-described embodiments can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "... unit" or "means for ..." shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (MET) for performing retransmissions in a radio communication system (RCS), said method (MET) comprising the steps of:

   - transmitting (M1-9) data (DU2) via a first radiation beam (B4, B2-1) from a first transceiver apparatus (TRA1) to a second transceiver apparatus (TRA2), and
   - retransmitting (M1-14) said data (DU2) or a part of said data (DU2-1) via a second radiation beam (B1, B4-1 from said first transceiver apparatus (TRA1) to said second transceiver apparatus (TRA2).

2. Method (MET) according to any of the preceding claims, wherein said first radiation beam (B4) is directed into a first transmission direction (MTD4) and wherein said second radiation beam (B1) is directed into a second transmission direction (MTD1) that is different to said first transmission direction (MTD4).

3. Method (MET) according to claim 2, wherein said second radiation beam (B1, B4-1) is selected, if an angular distance (AD1) between said first transmission direction (MTD4) and said second transmission direction (MTD1) is equal to or above a predefined threshold.

4. Method (MET) according to any of the preceding claims, wherein said first radiation beam (B2-1) is transmitted with a first angular beam spread (ABS2-1) and wherein said second radiation beam (B4-1) is transmitted with a second angular beam spread (ABS4-1) that is larger than said first angular beam spread (ABS2-1).

5. Method (MET) according to claim 4, wherein said method further comprises the steps of:

   - selecting (M1-9) a pre-coding vector from a first pre-coding codebook for the first radiation beam (B2-1), and
   - selecting (M1-13) a further pre-coding vector from a second pre-coding codebook for the second radiation beam (B4-1).

6. Method (MET) according to claim 4 or claim 5, wherein said first radiation beam (B2-1) is transmitted by a first number of antenna elements of an antenna system (TRA1-AS) that is controlled by said first transceiver apparatus (TRA1) and wherein said second radiation beam (B4-1) is transmitted by a second number of antenna elements of said antenna system (TRA1-AS) and wherein said second number of antenna elements is smaller than said first number of antenna elements.

7. Method (MET) according to any of the preceding claims, wherein said method (MET) further comprises the steps of:

   - determining (M1-5) at said second transceiver apparatus (TRA2) a radiation beam ranking for at least two radiation beams (B1, B2, B3, B5, B3-1, B-1),
   - transmitting (M1- 11) from said second transceiver apparatus (TRA2) to said first transceiver apparatus (TRA1) information of said radiation beam ranking (RANK- INFO), and
   - selecting (M1- 14) at said first transceiver apparatus (TRA1) said second radiation beam (B7, B4- 1) based on said radiation beam ranking (RANK- INFO) .

8. Method (MET) according to claim 7, wherein said information of said radiation beam ranking (RANK- INFO) comprises at least one indication for a radiation beam (B1, B2) that is preselected by said second transceiver apparatus (TRA2) .

9. Method (MET) according to claim 8, wherein said information of said radiation beam ranking (RANK- INFO) further comprises a quality value (SINR1, SINR2) for said preselected at least one radiation beam (B1, B2) and wherein said quality value (SINR1, SINR2) is a signal- to- noise ratio or a signal- to- noise- and- interference ratio.

10. Method (MET) according to any of the preceding claims 7 to 9, wherein said information of said radiation beam ranking (RANK- INFO) is transmitted in a single message with a non- acknowledgement (NACK2) for said data (DU2) .

11. Method (MET) according to any of the preceding claims, wherein said radio communication system (RCS) is a wireless wide area network, a wireless personal area network or a wireless body area network.

12. A first transceiver apparatus (TRA1) for performing retransmissions in a radio communication system (RCS), said first transceiver apparatus (TRA1) comprising:

   - means (TRA1-TR1, TRA1 -INT1, TRA1-CPU, TRA1-PROG) for transmitting data (DU2) via a first radiation beam (B4, B2-1), and
   - means (TRA1-TR1, TRA1-INT1, TRA1-CPU, TRA1-PROG) for retransmitting said data (DU2) or a part of said data (DU2-1) via a second radiation beam (B1, B4-1).

13. First transceiver apparatus (TRA1) according to claim 12, wherein said first transceiver apparatus (TRA1) is a mobile radio access point, a mobile station or a computerized device.

14. A second transceiver apparatus (TRA2) for receiving retransmissions in a radio communication system (RCS), said second transceiver apparatus (TRA2) comprising:

- means (TRA2- INT1, TRA2- TR1) for receiving data (DU2) via a first radiation beam (B4, B2- 1),
- means (TRA2-CPU, TRA2-PROG) for determining a radiation beam ranking for at least two radiation beams (B1, B2),
- means (TRA2- INT1, TRA2- TR1) for transmitting information of said radiation beam ranking (RANK- INFO), and
- means (TRA2- INT1, TRA2- TR1) for receiving said data (DU2) or a part of said data (DU2- 1) via a second radiation beam (B1, B4- 1) .

15. Second transceiver apparatus (TRA2) according to claim 14, wherein said second transceiver apparatus (TRA2) is a mobile station, a mobile radio access point or a computerized device.

*FIG. 1*

EP 2 645 592 A1

FIG. 2

*FIG. 3*

EP 2 645 592 A1

*FIG. 4*

EP 2 645 592 A1

*FIG. 5*

Europäisches
Patentamt

European
Patent Office

Office européen
des brevets

# EUROPEAN SEARCH REPORT

Application Number

EP 12 30 5360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG LIU ET AL: "Dual-Stream Beamforming Based HARQ Schemes for LTE-Advanced System", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 September 2009 (2009-09-24), pages 1-4, XP031557123, DOI: 10.1109/WICOM.2009.5301914 ISBN: 978-1-4244-3692-7 | 1,2, 11-13 | INV. H04B7/04 H04B7/06 |
| A | * page 2 - page 3 * ----- | 3 | |
| X | US 2009/080579 A1 (FUJII MASAAKI [JP]) 26 March 2009 (2009-03-26) | 1,2, 11-13 | |
| Y | * paragraphs [0074] - [0076], [0110] - paragraph [0114]; figure 10 * ----- | 3 | |
| Y | EP 1 587 224 A1 (FUJITSU LTD [JP]) 19 October 2005 (2005-10-19) * paragraph [0043] * ----- | 3 | |
| X | EP 2 375 607 A1 (SAMSUNG ELECTRONICS CO LTD [KR]) 12 October 2011 (2011-10-12) * paragraphs [0098], [0107] - [0109], [0136], [0137]; figure 13 * ----- | 1,4-6, 11-13 | TECHNICAL FIELDS SEARCHED (IPC) H04B H04L |
| X | WO 2010/049784 A1 (ERICSSON TELEFON AB L M [SE]; MOLNAR KARI [US]; HAGERMAN BO [SE]) 6 May 2010 (2010-05-06) | 1,4, 11-13 | |
| A | * page 13, line 16 - line 28; figure 5 * ----- | 5,6 | |
| X | US 2006/040707 A1 (KISH WILLIAM S [US] ET AL) 23 February 2006 (2006-02-23) | 1,11-13 | |
| Y | * paragraphs [0022], [0027], [0049] - [0052]; figures 2,6 * ----- | 7-10 | |
| | -/-- | | |

The present search report has been drawn up for all claims

| Place of search | Date of completion of the search | Examiner |
|---|---|---|
| Munich | 16 October 2012 | Franz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 12 30 5360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 219 299 A1 (SONY CORP [JP]) 18 August 2010 (2010-08-18) * paragraphs [0061] - [0063] * ----- | 7-10 | |
| A | "3rd Generation Partnership Project; Technical Specification Group Radio Access Network; High Speed Download Packet Access (HSDPA) enhancements (Release 6)", 3GPP STANDARD; 3GPP TR 25.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.1.0, 1 September 2004 (2004-09-01), pages 1-68, XP050369312, * page 11 * ----- | 10 | |
| | | | TECHNICAL FIELDS SEARCHED (IPC) |

The present search report has been drawn up for all claims

| Place of search | Date of completion of the search | Examiner |
|---|---|---|
| Munich | 16 October 2012 | Franz, Volker |

EPO FORM 1503 03.82 (P04C01)

Europäisches
Patentamt

European
Patent Office

Office européen
des brevets

Application Number

EP 12 30 5360

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 30 5360

The Search Division considers that the present European patent application does not comply with the
requirements of unity of invention and relates to several inventions or groups of inventions, namely:

```
1. claims: 1-3, 11-13

      Select the direction of the beam
                    ---

2. claims: 4-6

      Changing the beam width, selecting from different codebooks,
      using different number of transmit antennas.
                    ---

3. claims: 7-10

      Providing ranking  feedback from the receiver on the ranking
      of different radiation beams.
                    ---
```

EP 2 645 592 A1

## ANNEX TO THE EUROPEAN SEARCH REPORT
## ON EUROPEAN PATENT APPLICATION NO.

EP 12 30 5360

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2012

| Patent document cited in search report | | Publication date | Patent family member(s) | | Publication date |
|---|---|---|---|---|---|
| US 2009080579 | A1 | 26-03-2009 | NONE | | |
| EP 1587224 | A1 | 19-10-2005 | AU | 2003303791 A1 | 13-08-2004 |
| | | | CN | 1675859 A | 28-09-2005 |
| | | | EP | 1587224 A1 | 19-10-2005 |
| | | | JP | 4213124 B2 | 21-01-2009 |
| | | | US | 2005197071 A1 | 08-09-2005 |
| | | | WO | 2004066523 A1 | 05-08-2004 |
| EP 2375607 | A1 | 12-10-2011 | AU | 2011233860 A1 | 06-09-2012 |
| | | | EP | 2375607 A1 | 12-10-2011 |
| | | | KR | 20110109761 A | 06-10-2011 |
| WO 2010049784 | A1 | 06-05-2010 | CN | 102204114 A | 28-09-2011 |
| | | | EP | 2351243 A1 | 03-08-2011 |
| | | | KR | 20110081887 A | 14-07-2011 |
| | | | US | 2010112952 A1 | 06-05-2010 |
| | | | US | 2012214530 A1 | 23-08-2012 |
| | | | WO | 2010049784 A1 | 06-05-2010 |
| US 2006040707 | A1 | 23-02-2006 | CN | 1906955 A | 31-01-2007 |
| | | | EP | 1782639 A2 | 09-05-2007 |
| | | | TW | I351790 B | 01-11-2011 |
| | | | US | 2006040707 A1 | 23-02-2006 |
| | | | US | 2009022066 A1 | 22-01-2009 |
| | | | US | 2011151931 A1 | 23-06-2011 |
| | | | WO | 2006023239 A2 | 02-03-2006 |
| EP 2219299 | A1 | 18-08-2010 | CN | 101808342 A | 18-08-2010 |
| | | | EP | 2219299 A1 | 18-08-2010 |
| | | | US | 2010210219 A1 | 19-08-2010 |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2166807 B2

**Non-patent literature cited in the description**

- **PHILIPS.** System-level simulation results for channel vector quantisation feedback for MU-MIMO. *3GPP TGS RAN WG1, R1-063028,* November 2006
- **M. TRIVELLATO et al.** User Selection Schemes for MIMO Broadcast Channels with Limited Feedback. *Vehicular Technology Conference,* 22 April 2007, 2089-2093
- **X. AN ; C.-S. SUM ; R.V. PRASAD ; J. WANG ; Z. LAN ; J. WANG ; R. HEKMAT ; H. HARADA ; I. NIE-MEGEERS.** Beam switching support to resolve link-blockage problem in 60 GHz WPANs. *Proc. of IEEE Int. Symp. on Personal, Indoor and Mobile Radio Communications,* 2009